# EUROPEAN PATENT APPLICATION

(11) **EP 4 438 755 A1**
(43) Date of publication of application: **02.10.2024**
(21) Application number: 22898641.0
(22) Date of filing: 25.11.2022
(51) Int. Cl.: C22C 21/06, C22F 1/00, B65D 17/28, B65D 17/32

(54) **CAN LID FOR FOOD OR DRINK**

(30) Priority: 25.11.2021 JP 2021191242
(71) Applicant: Toyo Seikan Co., Ltd., Tokyo 141-8640 (JP); UACJ Corporation, Chiyoda-ku Tokyo 100-0004 (JP)
(72) Inventor: NAKANO, Shuji, Yokohama-shi, Kanagawa 230-0001 (JP); TAKAHASHI, Shigeya, Yokohama-shi, Kanagawa 230-0001 (JP); NISHIMOTO, Hideki, Yokohama-shi, Kanagawa 230-0001 (JP); ISOMURA, Ryotaro, Yokohama-shi, Kanagawa 230-0001 (JP); OKI, Takahiro, Yokohama-shi, Kanagawa 230-0001 (JP)
(74) Representative: J A Kemp LLP
(86) International application number: PCT/JP2022/043488
(87) International publication number: WO 2023/095859

(57) **Abstract**

The present invention relates to a can lid for food or drink, the can lid including an end and a tab for opening a score formed on the end. The end and/or the tab includes an aluminum alloy containing: Mn: 0.5 mass% to 1.4 mass%, Mg: 2.0 mass% to 4.5 mass%, Si: 0.6 mass% or less, Fe: 0.8 mass% or less, Cu: 0.25 mass% or less, Cr: 0.10 mass% or less, Zn: 0.25 mass% or less, and Ti: 0.10 mass% or less. With this configuration, even if the end and/or the tab contains a recycled aluminum alloy made up of aluminum UBCs as a raw material, a can lid having such an end and/or tab that has properties required for a can lid, such as pressure resisting strength, can be provided.

## Description

### Technical Field

The present invention relates to a can lid made from an aluminum alloy, the can lid including an end and a tab for tearing and opening a score formed on the end, and more particularly to a can lid for food or drink, the can lid including an end and a tab with required properties even though the can lid is made from a recycled material recycled from aluminum cans after content consumption.

### Background Art

As cans for containing therein a beverage such as beer and soft drinks or food, cans for food or drink are widely used, which are produced by attaching an aluminum can lid to a can body made of a metal such as aluminum or steel. Such aluminum can lids generally include an end and a tab for tearing a score formed on the end to form an opening defined by the score.

A material used for a can lid is required to have strength, formability, corrosion resistance, etc. That is, regardless of whether the end is for a positive pressure can containing, for example, a carbonated beverage as a content or for a negative pressure can with a reduced pressure due to a temperature drop caused consequently after high-temperature filling of the content, the end is required to have such an excellent pressure resisting strength that the can lid is not deformable by such pressure, and such a toughness that unintentional breakage of the score can be prevented. On the other hand, the tab is required to have breaking strength and toughness so as not to be broken or torn in formation of an opening.

As an aluminum alloy used for a can lid, for example, Patent Literature 1 listed below proposes a melt oxidation-inhibited aluminum-magnesium alloy being a beryllium-free aluminum-magnesium alloy and containing 0.8 mass% to 15 mass% of Mg and 0.2 mass% to 0.6 mass% of Fe with the total content of Al and Mg being 90 mass% or more and the content of P as an impurity being 0.001 mass% or less.

Moreover, Patent Literature 2 listed below proposes an aluminum alloy sheet for a can lid for a negative pressure can, the aluminum alloy sheet including a cold-rolled sheet including an aluminum alloy and having a thickness of 0.22 mm to 0.25 mm, the aluminum alloy containing, by mass: Mg: 0.80% to 1.50%, Mn: 0.80% to 1.20%, Fe: 0.40% to 0.60%, Si: 0.20% to 0.40%, and Cu: 0.15% to 0.25% with such a content relationship that Mn/Fe is from 1.5 to 2.5 and Mg/Mn ≥ 1.0, and the balance is aluminum and inevitable purities, and the aluminum alloy sheet having one or both surfaces coated with an organic resin film, the aluminum alloy sheet having such earing ratios after coating and baking of the organic resin that a 45° earing ratio is from 1.5% to 3.0% and a 0° to 180° earing ratio is from 1.0% to 2.5%, and - 0.6% ≤ (the 45° earing ratio) - (the 0° to 180° earing ratio) ≤ 1.5% is satisfied, and the aluminum alloy sheet having a tensile strength of 270 MPa to 300 MPa and a proof stress of 240 MPa to 270 MPa in a 0° direction with respect to a rolling direction.

### Citation List

### Patent Literature

Patent Literature 1: JP 5920705 B
Patent Literature 2: JP 5898426 B

### Summary of Invention

### Technical Problem

Used beverage cans (hereinafter sometimes referred to as "UBC") after content consumption are collected at a rate of almost 100%, and in the case of aluminum beverage cans, the UBCs are recycled into an aluminum raw material. While a 3000 series aluminum alloy having a high Mn content is generally used for a can body, a 5000 series aluminum alloy having a high Mg content with a greater strength than the 3000 series aluminum alloy is used for a can lid (with an end and a tab) from the viewpoint of strength, formability, corrosion resistance, etc.

Therefore, the recycled aluminum alloy made up of UBCs has a composition close to that of the 3000 series aluminum alloy, which accounts for a large proportion in the weight of the entire aluminum beverage cans, and has a higher Mn content and a lower Mg content than the 5000 series aluminum alloy. Therefore, it is difficult to use the recycled aluminum alloy for a can lid, and a new aluminum raw material has to be used for a can lid. However, a large amount of electric power is required for the production of a new aluminum raw material, and this large electric power consumption results in a great carbon dioxide emission amount. From the viewpoint of environmental impact, it is desired that a recycled material can be used in a can lid as well.

In addition, in an aluminum alloy containing a large amount of Mn, which is made from a recycled aluminum alloy made up of UBCs, since the strength of the score formed on the end decreases due to an increase in the amount of Al-Fe-Mn-Si-based crystals, there is a possibility that the score would be unintentionally broken when subjected to a drop impact etc. to cause leakage of the content from the cans. In addition, it has been found that there is a possibility that micro-cracking would occur in the organic coating on an inner surface side of the scoring portion (an inner surface side of the end) and in the rivet forming portion for tab attachment, and consequently corrosion of the end would occur due to metal exposure at micro-cracks or due to storage over time. Further, in the aluminum alloy in which the amount of the Al-Fe-Mn-Si-based crystals is increased, since the toughness is lowered, cracking would be easily generated, and when the score is torn to form the opening, there is a possibility that the tearing beyond the score results in breakage.

Further, the tab attached to the end is generally made from a thin sheet for easy formation of an opening and strength of the tab, and an end portion thereof is formed in such a manner that a gripping portion to be hooked with a finger is formed by folding process and the other portions of the end portion are formed by curling process. When an aluminum alloy containing an increased amount of Al-Fe-Mn-Si-based crystals is used, there is a possibility in forming the end portion that tab breakage would occur or cracking would occur on a metal surface of a portion under processing.

Accordingly, an object of the present invention is to provide a can lid provided with an end and/or a tab having properties required for the can lid such as pressure resisting strength even when the can lid contains a recycled aluminum alloy made up of aluminum UBCs as a raw material.

An another object of the present invention is to provide a can lid provided with an end and/or a tab, which has a high score strength even when formed from a material containing a recycled aluminum alloy made up of aluminum UBCs as a raw material and having a high Mn content and a high content of Al-Fe-Mn-Si-based crystals, the high score strength effectively preventing content leakage caused due to unintentional breakage of the score, and occurrence of micro-cracking in an organic coating due to scoring, and effectively preventing breakage of portions other than the score.

### Solution to Problem

According to the present invention, there is provided a can lid for food or drink, the can lid including an end and a tab for opening a score formed on the end, wherein the end and/or the tab includes an aluminum alloy containing: Mn: 0.5 mass% to 1.4 mass%, Mg: 2.0 mass% to 4.5 mass%, Si: 0.6 mass% or less, Fe: 0.8 mass% or less, Cu: 0.25 mass% or less, Cr: 0.10 mass% or less, Zn: 0.25 mass% or less, and Ti: 0.10 mass% or less.

The can lid for food or drink according to the present invention may be preferably configured such that:
(1) the aluminum alloy contains: Mn: 0.5 mass% to 1.0 mass%, Mg: 3.0 mass% to 4.5 mass%, Si: 0.60 mass% or less, Fe: 0.8 mass% or less, Cu: 0.25 mass% or less, Cr: 0.10 mass% or less, Zn: 0.25 mass% or less, and Ti: 0.10 mass% or less;
(2) the aluminum alloy contains: Mn: 0.5 mass% to 1.0 mass%, Mg: 3.0 mass% to 4.5 mass%, Si: 0.35 mass% or less, Fe: 0.6 mass% or less, Cu: 0.25 mass% or less, Cr: 0.10 mass% or less, Zn: 0.25 mass% or less, and Ti: 0.10 mass% or less;
(3) the aluminum alloy contains: Mn: 0.5 mass% to 1.0 mass%, Mg: 2.0 mass% to 3.0 mass%, Si: 0.60 mass% or less, Fe: 0.8 mass% or less, Cu: 0.25 mass% or less, Cr: 0.10 mass% or less, Zn: 0.25 mass% or less, and Ti: 0.10 mass% or less;
(4) the aluminum alloy contains: Mn: 0.5 mass% to 1.0 mass%, Mg: 2.0 mass% to 3.0 mass%, Si: 0.35 mass% or less, Fe: 0.6 mass% or less, Cu: 0.25 mass% or less, Cr: 0.10 mass% or less, Zn: 0.25 mass% or less, and Ti: 0.10 mass% or less;
(5) the Mg content in the aluminum alloy is from 2.0 mass% to 3.0 mass%, and a score residual thickness in an opening initiating portion of the score is 71% or less of an original thickness;
(6) the aluminum alloy sheet after coating and baking has a tensile strength ranging from 350 MPa to 410 MPa in a 0° direction with respect to a rolling direction;
(7) a non-processed portion of the end has a thickness of 0.19 mm to 0.30 mm, and a non-processed portion of the tab has a thickness of 0.24 mm to 0.35 mm;
(8) the end and the tab are made of the same aluminum alloy;
(9) the aluminum alloy includes a recycled material recycled from used aluminum beverage cans.
(10) the Mn content of the aluminum alloy is from 0.8 mass% to 1.4 mass%;
(11) the tearable score includes inclined surfaces and a bottom surface in a vertical cross section of the score in a width direction of the score, the inclined surfaces facing each other and defining a score width decreasing downward, and the can lid includes, in at least a part thereof, a portion in which a width of the bottom surface is 65% or less of a width of an imaginary bottom surface defined by imaginary extension lines of the inclined surfaces and an imaginary extension line passing through a center of the bottom surface;
(12) the inclined surfaces and the bottom surface are continuous via curved surfaces;
(13) the bottom surface includes a flat portion in a middle portion thereof, and a width of the flat portion is 65% or less of the width of the imaginary bottom surface;
(14) the width defined by the imaginary extension lines of the inclined surfaces and the imaginary extension line passing through the center of the bottom surface is from 15 µm to 40 µm;
(15) a score angle formed by the inclined surfaces is from 40 degrees to 60 degrees;
(16) the tearable score is a main score, the can lid includes an auxiliary score adjacent to the main score and located at an inner side of the main score, and in a vertical cross section of the score in the width direction of the score, a metal exclusion amount S0 by fabrication of the auxiliary score is 25% or more of a metal exclusion amount S1 by fabrication of the main score;
(17) the main score includes a great score residual thickness portion in which a score residual thickness with respect to an imaginary thickness when no score is formed in a scoring portion is larger than a main score residual thickness rate and is 85% or less;
(18) the tearable score is a main score, the can lid includes an auxiliary score adjacent to the main score and located at an inner side of the main score, a spout prevention score in the vicinity of the main score is formed in the vicinity of an opening initiating portion of the main score, and a score residual thickness of the spout prevention score is from 70% to 90% of an original thickness.
(19) the end includes a rivet forming portion for tab attachment, and a processing rate of a central portion of the rivet forming portion to an original thickness is 70% or less of the original thickness;
(20) a ratio of a diameter of a coining region of a top surface of the rivet forming portion of the end to an inner diameter of a side wall portion of the rivet forming portion is from 40% to 95%; or
(21) the tab includes a finger hooking portion in which a ratio of a thickness of the finger gripping portion to an original thickness (the thickness of the finger hooking portion/the original thickness) is 2 or more and equal to or less than a value of a ratio of a thickness of a curled portion of the tab to the original thickness (the thickness of the curled portion/the original thickness).

According to the present invention, there is provided a method of producing an end, the method being a method of producing the can lid for food or drink described above, wherein a score forming blade for use in forming the tearable score includes inclined side surfaces and a tip portion, the inclined side surfaces facing each other and defining a blade width decreasing toward the tip portion in a vertical cross section in the width direction of the score forming blade, and the tip portion being located at lower ends of the inclined side surfaces, and the score forming blade includes, in at least a part thereof, a portion in which a width of the tip portion is 65% or less of a width of an imaginary tip surface defined by imaginary extension lines of the inclined side surfaces and an imaginary extension line passing through a center of the tip portion.

In the method of producing an end according to the present invention, preferably,
(1) both sides of the tip portion are continuous with the inclined side surfaces via curved surfaces; and/or
(2) the tip portion includes a flat portion in a middle portion thereof, and a width of the flat portion is 65% or less of a width of the imaginary tip surface.

According to the present invention, there is further provided a can for containing food or drink, wherein the can lid for food or drink is applied to a can containing food or drink.

### Advantageous Effects of Invention

According to the can lid for food or drink of the present invention, even when a recycled material made up of aluminum UBCs is used, an end having an excellent pressure resisting strength and a tab having excellent bending resistance can be obtained because each of the main alloy element components is in the ranges as specified above. This makes it possible to reduce the usage amount of new aluminum associated with a large emission of carbon dioxide.

Further, in the can lid for food or drink according to the present invention, even if the Mg content in the recycled material made up of aluminum UBCs is in a range different from that of the 5000 series aluminum alloy, it is possible to provide a can lid which does not impair the performance required for a can lid such as pressure resisting strength and openability, because of the strength obtained by Mn contained in the recycled material, and of the original thickness (non-processed portion) of the end and the residual thickness in the opening initiating portion of the scoring portion as specified above.

In the present invention, by improving the form (such as shape and dimension) of the tearable score (main score) formed on the end, even in the end made of a recycled aluminum alloy made up of aluminum UBCs with an increased amount of Al-Fe-Mn-Si-based crystals as a raw material, a high score strength is obtained, and occurrence of unintentional breakage of the score is effectively prevented even when subjected to drop impact or the like. Further, the occurrence of micro-cracking in the organic coating on the back surface (inner surface side of the end) of the scoring portion and on the top surface with the rivet is effectively prevented, and an end having excellent corrosion resistance can be provided. Further, the tearing of the score can be performed without breakage (tearing beyond the score) of a portion beyond the score or a so-called pop missile phenomenon at the time of opening initiating, and the openability is still excellent.

In addition, regarding the tab attached to the score, by improving the thickness of the curled portion and the thickness of the finger hooking portion formed by folding process as described above, it is possible to effectively prevent the occurrence of cracking on the metal surface of the tab and the occurrence of scratches on the rivet in attaching the tab to the end while maintaining excellent openability.

Furthermore, according to the method of producing an end according to the present invention, even in the case of using aluminum UBCs in which the Mn content is high and the amount of Al-Fe-Mn-Si-based crystals is likely to increase, it is possible to form a score having high score strength as described above.

### Brief Description of Drawings

FIG. 1 includes schematic views illustrating an example of a can lid of the present invention, where FIG. 1(A) is a plan view and FIG. 1(B) is a cross-sectional view.
FIG. 2 is a partially enlarged cross-sectional view for explaining a scoring portion on an end.
FIG. 3 is a view for explaining a scoring portion on an end, and is a partially enlarged cross-sectional view along an axial cross section in a width direction of the score.
FIG. 4 is a partially enlarged cross-sectional view for explaining the metal exclusion amount of a main score and an auxiliary score.
FIG. 5 is a partially enlarged cross-sectional view showing an axial cross section in the longitudinal direction of the score.
FIG. 6 is a partially enlarged plan view for explaining a score formed in the vicinity of a tab attachment portion to which a tab is attached with a rivet.
FIG. 7 is an enlarged cross-sectional view of a rivet forming portion.
FIG. 8 is a photograph showing a cross-section of the tab attachment portion.
FIG. 9 includes views illustrating an example of a tab for use in the present invention, where FIG. 9(A) is a plan view and FIG. 9(B) is a cross-sectional view.
FIG. 10 is a view for explaining a score forming blade for use in the method of producing an end according to the present invention, and is an enlarged cross-sectional view of the score forming blade along a cross-section in a width direction.

### Description of Embodiments

### Aluminum Alloy

An important feature of a can lid for food or drink according to the present invention is that an aluminum alloy constituting an end and/or a tab of the can lid contains: Mn: 0.5 mass% to 1.4 mass%, Mg: 2.0 mass% to 4.5 mass%, Si: 0.6 mass% or less, Fe: 0.8 mass% or less, Cr: 0.10 mass% or less, Zn: 0.25 mass% or less, Ti: 0.10 mass% or less, and Cu: 0.25 mass% or less.

As described above, the recycled material made up of aluminum UBCs has an alloy composition similar to that of 3000 series aluminum alloy because the recycled material is made mainly from the can bodies composed of 3000 series aluminum alloy in which the Mg content is small and the Mn content is large. However, even when the end and tab of the can lid of the present invention contain a recycled material composed mainly of 3000 series UBC, by using an aluminum alloy with the above-mentioned alloy composition having an adjusted Mg content, the end and tab of the can lid of the present invention are free from reduction in pressure resisting strength, thereby being free from lid deformation and are effectively prevented from breaking of the tab at the time of opening.

In the aluminum alloy constituting the end and/or the tab, the Mn content is preferably in a range from 0.5 mass% to 1.4 mass%, and particularly 0.5 mass% to 1.0 mass%.

That is, although Mn is an essential element for improving the strength of the aluminum alloy, when the Mn content is increased, the amount of Al-Fe-Mn-Si-based crystals is increased and consequently the toughness is decreased, so that the score strength is decreased on the end and the score would be unintentionally broken, and the tab would be broken or torn at the time of forming the opening and the repeated bendability would be deteriorated.

In addition, Mg is an essential element for providing strength required for a can lid, such as tensile strength, proof stress, and elongation, and when the Mg content is small in the end, there is a possibility that the end is deformed when employed in a positive pressure can or subjected to a sterilization process or the like, and when the Mg content is small in the tab, there is a possibility that the tab breaking strength is lowered. On the other hand, when the Mg content is larger than the aforementioned range, there is a possibility that cracking would occur in an ingot of the alloy or cracking would occur during hot rolling or can lid formation.

Therefore, even in the case where the Mn and Mg contents are within the aforementioned ranges, when the Mn content is large and the amount of Al-Fe-Mn-Si-based crystals would be likely large, the tensile strength and the like of the aluminum alloy would be appropriately complemented by setting the Mg content in a range from 2.0 mass% to 3.0 mass%, thereby making it possible to have an excellent pressure resisting strength while suppressing cracking during forming. On the other hand, in an aluminum alloy in which the Mn content is relatively small, when the Mg content is from 3.0 mass% to 4.5 mass%, similarly, excellent pressure resisting strength can be obtained.

Si and Fe form the above-described Al-Fe-Mn-Si-based crystals, which would serve as recrystallization nuclei during hot rolling to form crystal grains with various orientations, thereby suppressing concentration in the Cube orientation at the end of hot rolling. From such a viewpoint, the Si content is preferably 0.6 mass% or less, particularly preferably 0.35 mass% or less, and the Fe content is preferably 0.8 mass% or less, particularly preferably 0.6 mass% or less.

Further, Cu and Cr are contained in the aluminum alloy in order to increase the strength of the aluminum alloy, but if the Cu content is larger than the aforementioned range, cracking would occur during hot rolling, and if the Cr content is larger than the aforementioned range, coarse intermetallic compounds would be generated.

Further, Zn and Ti are impurities inevitably contained in the aluminum alloy and do not affect the can lid of the present invention as long as they are not more than the above-mentioned values.

In the can lid of the present invention, as described above, by appropriately adjusting the Mg content according to the Mn content, the strength can be ensured by Mn contained in the recycled material, and as described below, by adjusting a residual thickness of the score in an opening initiating portion of a scoring portion formed on the end, the can lid can be used without occurrence of unintentional score breakage, tab bending, and the like.

The aluminum alloy constituting the end and/or the tab is adjusted to the above-mentioned alloy composition by adding Mg to a recycled material made up of aluminum UBCs and incorporating new aluminum in the alloy composition, if necessary. As described above, the recycled material made up of aluminum UBCs contains Mn in an amount of 0.5 mass% to 1.4 mass% because the recycled material is mainly composed of the 3000 series aluminum alloy constituting the can bodies. As the recycled material of aluminum, a scrap material discharged in the aluminum alloy sheet manufacturing process and the aluminum can manufacturing process may also be used together with the recycled material made up of aluminum UBCs.

As described above, the aluminum alloy sheet for use in forming the end and/or tab of the can lid according to the present invention is produced by melting a recycled material of aluminum and, if necessary, new aluminum, while adjusting the contents of the alloy components such as Mg, and then performing hot rolling and cold rolling. It is preferable to perform intermediate annealing in the middle of cold rolling.

The aluminum alloy sheet may be subjected to various surface treatments, if necessary, by known methods, and then an organic coating such as a thermoplastic resin coating or a coating film may be formed on the aluminum alloy sheet by a known method.

Examples of the surface treatment include, but are not limited to, known surface treatments such as a chromate-phosphate process and a chemical conversion treatment with a material containing an oxide(s) of zirconium and/or titanium as a main component.

Examples of the thermoplastic resin coating include olefin resin films such as polyethylene, polypropylene, ethylene-propylene copolymer, ethylene-vinyl acetate copolymer, ethylene-acrylic ester copolymer, and ionomers; polyester films such as polyethylene terephthalate; polyamide films such as nylon 6, nylon 6,6, nylon 11, and nylon 12; polyvinyl chloride films; and polyvinylidene chloride films. The thermoplastic resin film may be non-stretched or biaxially stretched.

Examples of a coating material usable for forming a coating film include modified epoxy coating materials such as phenol-epoxy and amino-epoxy, vinyl chloride-vinyl acetate copolymer, saponified vinyl chloride-vinyl acetate copolymer, vinyl chloride-vinyl acetate-maleic anhydride copolymer, epoxy-modified, epoxyamino-modified, epoxyphenol-modified vinyl coating materials or modified vinyl coating materials, acrylic coating materials, and synthetic rubber-based coating materials such as styrene-butadiene-based copolymer.

The aluminum alloy sheet for use in forming the end and/or the tab of the can lid according to the present invention preferably has a tensile strength in a range from 350 MPa to 410 MPa, particularly 370 MPa to 400 MPa in the 0° direction with respect to rolling in the state of a coated aluminum alloy sheet, to which an epoxy-based coating material, a polyester-based coating material or the like is applied and baked. With the tensile strength within the aforementioned range, the can lid can be used also as a can lid for a positive pressure can.

The thickness of the aluminum alloy sheet is not limited to those mentioned above, but the thickness of the aluminum alloy sheet as a material for the end is preferably in a range from 0.19 mm to 0.30 mm, and the thickness of the aluminum alloy sheet as a material for the tab is preferably in a range from 0.24 mm to 0.35 mm.

In the present invention, it is most preferable that both the end and the tab are made of an aluminum alloy or aluminum alloys having the above-mentioned composition(s), but it is preferable that at least the end is made of an aluminum alloy having the above-mentioned composition. The end and the tab are not necessarily required to have the same composition, but are preferably made of an aluminum alloy having the same composition from the viewpoint of productivity and economical efficiency.

### End and Tab

The can lid of the present invention is not limited in its form as long as it has an end and a tab for tearing a score formed on the end to form an opening, and various forms can be adopted for the can lid.

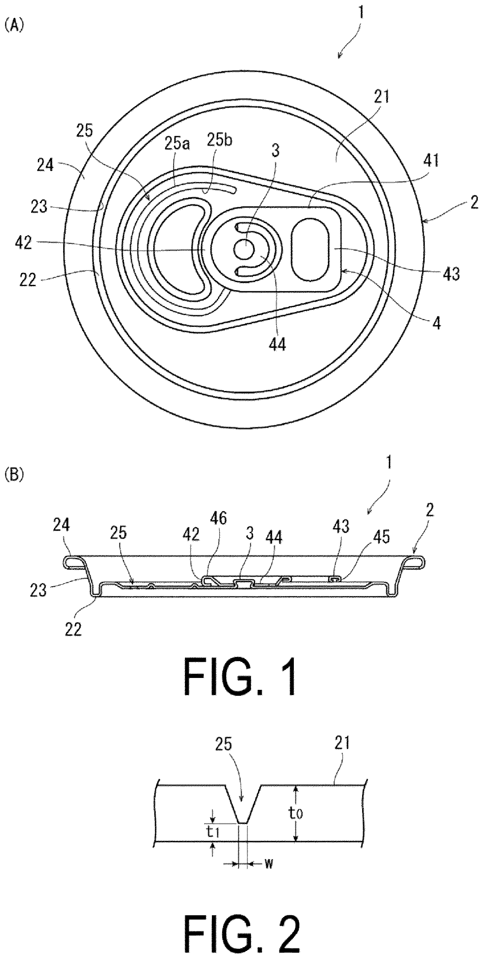

FIGS. 1(A) and 1(B) are views each illustrating an example of a can lid of the present invention, where FIG. 1(A) is a plan view and FIG. 1(B) is a cross-sectional view.

The can lid labeled with the numeral reference 1 indicating the entire can lid is a stay-on-tab can lid including an end 2 and a tab 4 fixed to the end 2 by a rivet 3.

The end 2 includes a circular center panel 21, a chuck wall radius 22 projecting downward from a peripheral edge of the center panel 21, a chuck wall 23 rising from an outer side wall of the chuck wall radius 22, and a seaming panel 24 being continuous with the chuck wall 23.

A score 25 is formed on the center panel 21, and the score 25 includes a main score 25a and an auxiliary score 25b provided on an inner side of the main score 25a. The auxiliary score 25b is for preventing cracking during processing of the main score, and is shallower than the main score 25a and is not tearable.

On the other hand, the tab 4 includes a tab body 41, an arc-shaped tab nose portion 42 formed at a position on a content pouring direction side, a finger hooking portion (gripping portion) 43 formed on the opposite side of the tab nose portion 42, and a fixing portion 44 to which the tab body 41 is fixed by the rivet 3. In addition, the tab body 41 is bent at an outer peripheral edge 45 of the gripping portion 43, and a curled portion 46 folded downward is formed over the entire periphery of the outer peripheral edge other than the gripping portion 43.

As described above, in the can lid of the present invention, it is effective to adjust the Mg content in accordance with the Mn content in the aluminum alloy constituting the end and the tab in order to realize the pressure resisting strength required for the end and the tab. By further adjusting the score residual thickness in an opening initiating portion in the scoring portion formed on the end, it becomes possible that unintentional score breakage is suppressed and the openability is improved to efficiently prevent occurrence of tab tearing and the like.

Since the opening initiating portion of the scoring portion is located immediately below the tab, water droplets would adhere to the tab, and since the 5000 series aluminum alloy typically used for the can lid contains a large Mg content, sensitivity to moisture is high and there is a risk of stress corrosion-caused cracking if the residual thickness of the score is reduced. However, the aluminum alloy with the Mg content in the aforementioned range is free from the risk of the stress corrosion-caused cracking and therefore allows the score residual thickness of the opening initiating portion to be thinner, thereby making it possible to form the opening with a smaller force. On the other hand, since an aluminum alloy containing a large Mn content and a large amount of Al-Fe-Mn-Si-based crystals tends to be inferior in toughness, tab tearing tends to occur at the time of tab opening. However, since the opening can be formed with a smaller force as described above, it is possible to effectively prevent the occurrence of tab tearing even in an aluminum alloy with a small Mg content.

FIG. 2 is a partial cross-sectional view schematically illustrating the score forming portion of the end. More specifically, as shown in FIG. 2, it is desirable to form the score so that the ratio {(t₁/t₀) × 100 (%)} of the score residual thickness (thickness of the scoring portion) t₁ in the opening initiating portion of the scoring portion where the score 25 is formed to the non-processed portion (original thickness) t₀ of the center panel 21 of the end 2 is 71%.

The ratio of the score residual thickness to the original thickness t₀ of the end may vary depending on the original thickness. With a greater original thickness, the ratio will be smaller. More specifically, with an original thickness of the end in a range from 0.19 mm to 0.30 mm, the ratio is preferably 71% or less when the original thickness is greater than 0.190 mm and 0.200 mm or less, preferably 68% or less when the original thickness is greater than 0.200 mm and 0.210 mm or less, preferably 64% or less when the original thickness is greater than 0.210 mm and 0.220 mm or less, preferably 61% or less when the original thickness is greater than 0.220 mm and 0.230 mm or less, preferably 59% or less when the original thickness is greater than 0.230 mm and 0.240 mm or less, 56% or less when the original thickness is greater than 0.240 mm and 0.250 mm or less, preferably 54% or less when the original thickness is greater than 0.250 mm and 0.260 mm or less, preferably 52% or less when the original thickness is greater than 0.260 mm and 0.270 mm or less, preferably 50% or less when the original thickness is greater than 0.270 mm and 0.280 mm or less, preferably 48% or less when the original thickness is greater than 0.280 mm and 0.290 mm or less, and preferably 47% or less when the original thickness is greater than 0.290 mm and 0.300 mm or less.

Further, the auxiliary score which is formed together with the tearable main score and is adjacent to the main score and located at an inner side of the main score is preferably configured such that the thickness of the auxiliary score is in a range of not less than a residual thickness rate of the main score but not more than 90% of the original thickness and a width of the auxiliary score is also preferably in a range from 50 µm to 110 µm.

The score residual thickness and the score width are not necessarily constant from a starting end to a terminal end of the score, and can be appropriately varied depending on the opening initiating portion and the position of the score.

The end for use in the can lid for food or drink according to the present invention is, as described above, improved in the score residual thickness, score shape, and the like of the tearable score (main score) formed on the end, thereby making it possible to provide an improved score strength in an end made of a recycled aluminum alloy made up of aluminum UBCs with an increased amount of Al-Fe-Mn-Si-based crystals as a raw material. As described later, this makes it possible to efficiently prevent the occurrence of micro-cracking in the organic coating on a back surface (end inner surface side) of the scoring portion, tearing beyond the score in tearing the score, or the so-called pop missile phenomenon at the opening initiating, etc.

### Score Shape

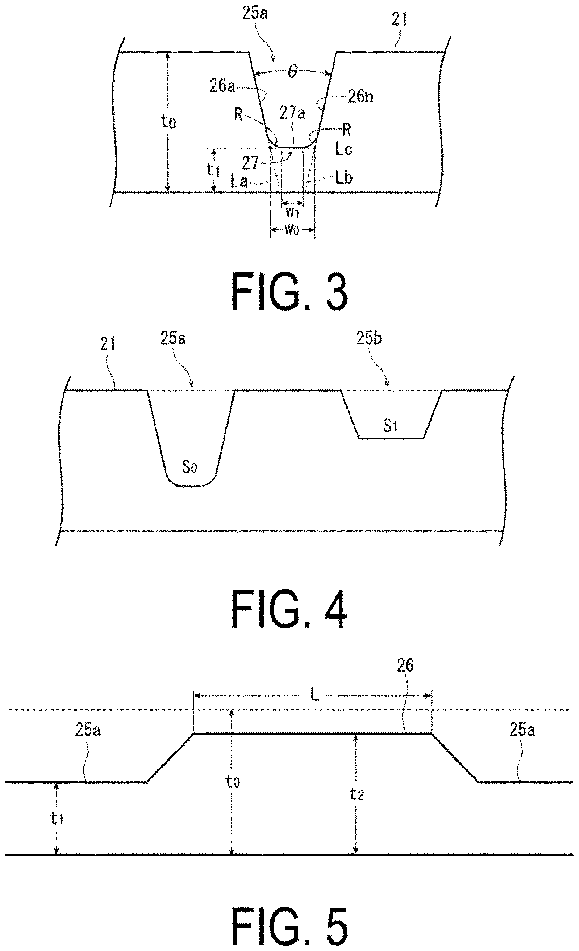

In the end of the present invention, as shown in FIG. 3 showing an axial cross section of the score along the width direction of the score, it is preferable that the main score 25a at least partially includes inclined surfaces 26a and 26b facing each other and defining a score width decreasing downward, and a bottom surface 27 having a flat portion 27a in middle portion thereof, the inclined surfaces 26a and 26b and the bottom surface 27 are continuous via curved surfaces R, and the end includes at least partially a portion in which W1 is 65% or less of WO, where W1 is a width of the flat portion 27a of the bottom surface, and WO is a width of an imaginary bottom surface 27 defined by imaginary extension lines La and Lb of the inclined surfaces 26a and 26b and an imaginary extension line Lc passing the center of the bottom surface 27.

As described above, the tearable main score is provided such that the inclined surfaces and the bottom surface are continuous via the curved surfaces, and the width of the bottom surface (the width of the flat portion 27a in the example shown in FIG. 2) is 65% or less of the imaginary bottom surface, whereby the score strength can be improved, and breakage of the score can be effectively prevented even when the can filled with content receives a drop impact or transportation-caused vibration.

That is, as is apparent from the results of Examples to be described later, if the width W1 of the flat portion is larger than the aforementioned range, there is a possibility that the content would leak from the score.

The width of the bottom surface is a distance in a middle portion of the bottom surface excluding the curved surfaces connecting the inclined surfaces and the bottom surface, and is the width of the flat portion in the case where the bottom surface has the flat portion in the middle thereof as shown in FIG. 2. However, the width of the flat portion may be as close to 0 as possible, and in such a case, the bottom surface has a substantially arc shape continuous with the curved surfaces.

Further, in the preferred embodiment of the present invention shown in the drawings, the inclined surfaces and the bottom surface of the score are continuous via curved surfaces, but even when the inclined surfaces and the bottom surface are not connected via such curved surfaces, similar effects as with the case where the inclined surfaces and the bottom surface are via such curved surfaces can be obtained if the end is configured with a large score residual thickness or with certain angles formed by the inclined surfaces and the bottom surface.

In the end of the present invention, from the viewpoint of improving the score strength, it is preferable that the portion in which the flat portion of the bottom surface of the main score is in the aforementioned numerical range is formed in the entire main score. However, the main score may partially have such a portion, for example, in a rear half portion of the opening, in a thiner portion with a smaller score residual thickness, or the like.

The width WO of the imaginary bottom surface of the score bottom surface is preferably in a range from 15 µm to 40 µm. As a result, micro-cracking would not occur in the organic coating (thermoplastic resin coating or coating film) on the inner surface side of the score portion (back side of the end), so that metal exposure on the inner surface of the end is effectively prevented, thereby making it possible to provide an end having an excellent corrosion resistance.

When the width WO of the imaginary bottom surface is smaller than the aforementioned range, stress corrosion-caused cracking would occur, depending on the material used. On the other hand, when the width WO of the imaginary bottom surface is larger than the aforementioned range, micro-cracking would more likely occur on the inner surface side of the score portion as compared with the case where the width WO is in the aforementioned range.

Further, a score angle Θ formed by the inclined surfaces 26a and 26b of the score is preferably in a range from 40 degrees to 60 degrees. When the score angle Θ is within the aforementioned range, micro-cracking would not occur in the organic coating on the inner surface side of the score portion (the back side of the end), so that metal exposure on the inner surface of the end is effectively prevented, thereby making it possible to provide an end having an excellent corrosion resistance.

When the score angle is larger than the aforementioned range, micro-cracking would occur in the organic coating on the inner surface side of the score portion (the back side of the end). When the score angle is smaller than the aforementioned range, a score forming blade would be damaged due to use for a long time, such as chipping of a cutting edge thereof or chipping or cracking from a root part thereof.

### Metal Exclusion Amount of Score

In the end for use in the present invention, as shown in FIG. 1, it is preferable that the end of the present invention is provided with the tearable main score and an auxiliary score adjacent to the main score and located at an inner side of the main score. The auxiliary score is provided for preventing breakage of the main score in fabricating the main score, and is configured not to be torn, and therefore to have a higher score residual thickness rate. In the present invention, in particular, from the viewpoint of preventing the occurrence of micro-cracking in the organic coating on the inner surface side of the main score (inner surface side of the end), it is desirable to form the auxiliary score such that a metal exclusion amount S0 caused by scoring for the auxiliary score is 25% or more of a metal exclusion amount S1 caused by scoring for the main score in the vertical cross section of the score along the width direction.

That is, as shown in FIG. 4, it is preferable to form the main score and the auxiliary score so that the ratio [(S1/SO) × 100] of the metal exclusion amount S1 of the auxiliary score 25b to the metal exclusion amount S0 of the main score 25a is 25% or more, particularly in a range from 25% to 200%, where the cross-sectional areas S0 and S 1 of the respective scores in the vertical cross section of the main score 25a and the auxiliary score 25b along the width direction are defined as the respective metal exclusion amounts. When the metal exclusion amount of the auxiliary score is smaller than the aforementioned range, micro-cracking would occur in the organic coating on the inner surface side of the main score (inner surface side of the end). On the other hand, if the metal exclusion amount of the auxiliary score is larger than the aforementioned range, this would not result in any defects on the end, but the forming load becomes large and there is a risk of damage of scoring tools.

The exclusion amounts of the main score and the auxiliary score are not necessarily constant from the starting end to the terminal end of the score, and may vary depending on positions.

The cross-sectional shape of the score is not limited as long as the ratio of the exclusion amount is in the aforementioned range.

### Great Score Residual Thickness Portion

As described above, in the case where the pressure inside the can is positive such as cases where the content is beer, carbonated drink or the like, at the time of opening initiating of the score, the release of the inner pressure spontaneously causes abrupt pushing-up of the portion to be opened with gas pressure caused by the release, thereby tearing the score. By the impetus of the pushing-up, the portion to be opened would be separated from a panel portion and blown off, which is so-called pop missile phenomenon. Such a pop missile phenomenon can be prevented by providing a great score residual thickness portion in a part of the main score.

In the present invention, as shown in FIG. 5 showing an axial cross section of the main score 25a along the score length direction, it is preferable that a great score residual thickness portion 26 having a score residual thickness greater than that of the main score is formed in a part of the main score 25a, and the score residual thickness rate of the great score residual thickness portion 26 is higher than the score residual thickness rate of the main score and is 85% or less.

That is, as shown in FIG. 5, in the present invention, the great score residual thickness portion is configured such that R1 < R2 ≤ 85%, where R1 is a score residual thickness rate of the main score 25a and is a ratio [(t1/t0) × 100 (%)] of the main score residual thickness (t1: thickness of the scoring portion) to an imaginary thickness (t0) when the score 25a is not formed, and R2 is a score residual thickness rate of the great score residual thickness portion 26 and is a ratio [(t2/t0) × 100 (%)] of the residual thickness (t2) in the great score residual thickness portion.

The great score residual thickness portion may have any relationship with the main score residual thickness as long as it is higher than the score residual thickness rate of the main score and is 85% or less, but if the step amount from the main score (residual thickness difference (t2 - t1) in FIG. 2) is too large, the opening operation would not proceed smoothly, and the force required for opening would be greater. Therefore, the residual thickness difference from the main score is preferably 50 µm or less.

It is also apparent from the results of Examples described later that when the score residual thickness rate is in the aforementioned range, the score can be smoothly torn without tearing beyond the score. That is, in the case where the great score residual thickness portion having a score residual thickness rate of 85% or less is formed, the tearing of the score will be performed smoothly without tearing the portions beyond the score even in the end made of the aluminum UBC-derived aluminum alloy with a high Mn content, in which the amount of Al-Fe-Mn-Si-based crystals is likely to increase.

On the other hand, when the score residual thickness rate of the great score residual thickness portion is larger than the aforementioned range, the tearing of the score will be stopped at the great score residual thickness portion 26, which in turn would cause the tearing of the end to proceed beyond the score undesirably from the great score residual thickness portion 26.

The length of the great score residual thickness portion in the score length direction (indicated by L in FIG. 5) can be appropriately changed depending on the residual thickness rate and formation position of the great score residual thickness portion, the desired pop missile resistance effect, and the like, but is preferably in a range from 3 µm to 10 µm.

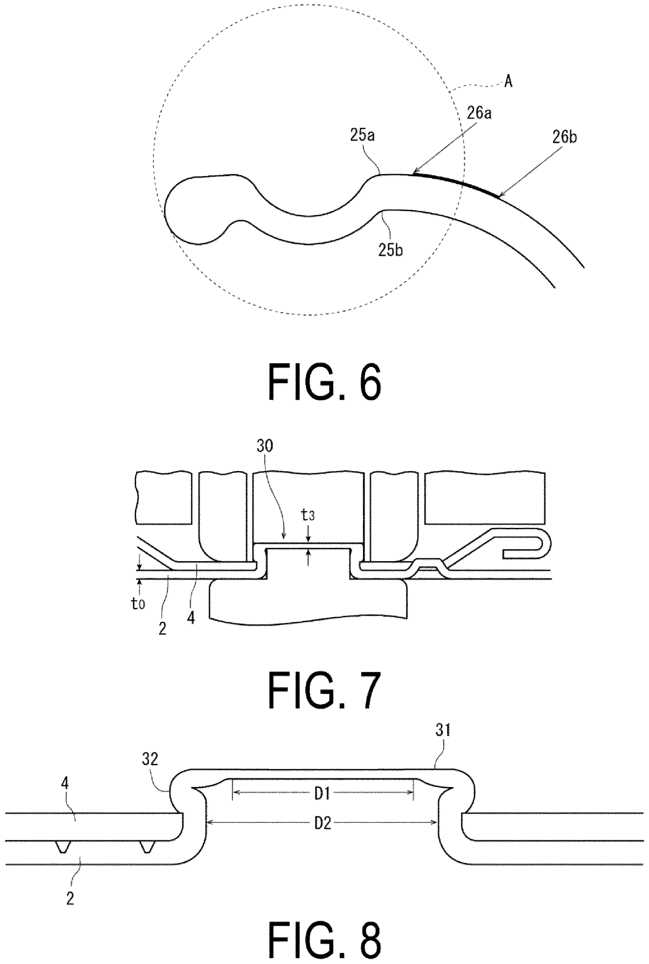

FIG. 6 is a partially enlarged plan view for explaining a score formed in the vicinity of a tab attachment portion by the rivet 3 of FIG. 1. In FIG. 6, a region A whose outer periphery is indicated by a dotted line is a coining region associated with rivet forming, and the thickness in this region is reduced by the coining process as compared with other portions. As is apparent from FIG. 6, the main score 25a and the auxiliary score 25b are formed in the coining region A, the great score residual thickness portion is formed in the main score 25a in the coining region A, and the great score residual thickness portion is formed in the area from the 26a to the 26b in FIG. 3. The great score residual thickness portion is formed up to the position of the 26b portion located outside the coining region A, and the 26b portion is a portion where the original thickness of the aluminum alloy sheet constituting the end is maintained.

In the present invention, since the residual thickness rate of the great score residual thickness portion is based on the imaginary thickness when the score is not formed in the place where the great score residual thickness portion is provided, it is possible to form the great score residual thickness portion effective for the main score even in the case where the great score residual thickness portions are respectively formed in places having different imaginary thicknesses (t0) as a reference as shown in FIG. 3. That is, the start point 26a of the great score residual thickness score may be inside or outside the region A. The position and number of the great score residual thickness portion(s) are not limited, but it is preferable to provide the great score residual thickness portion(s) around the opening initiating portion or the coining region.

### Spout Prevention Score

As described above, in the case where the pressure inside the can is positive such as cases where the content is beer, carbonated drink or the like, at the time of opening initiating of the score, the release of the inner pressure spontaneously causes abrupt pushing-up of the portion to be opened with gas pressure caused by the release, thereby tearing the score. By the impetus of the pushing-up, the portion to be opened would be separated from a panel portion and blown off, which is so-called pop missile phenomenon.

In the end for use in the present invention, such a pop missile phenomenon can be prevented by providing a score (spout prevention score) which crosses the auxiliary score in the vicinity of the opening initiating portion of the score, is close to the main score, and has a score residual thickness rate of 70% to 90% of the original thickness. That is, the auxiliary score is provided in order to prevent the main score from cracking during the fabrication of the main score and is configured not to be torn off, and the score in a direction crossing the auxiliary score extends in a direction of blocking the progress of the tearing of the main score and the rise of the opening portion due to the release of the internal pressure, so that the pop missile phenomenon can be effectively prevented. When the score residual thickness of the spout prevention score is smaller than the aforementioned range, micro-cracking would be generated in the organic coating on the inner surface side of the blow-out prevention score (inner surface of the end). On the other hand, if the score residual thickness of the spout prevention score is larger than the aforementioned range, the effect of preventing the pop missile phenomenon would not be obtained sufficiently. The spout prevention score may be provided close to the main score but not across the auxiliary score, i.e., outside the main score, and the position thereof is not limited but is preferably formed in the vicinity of the opening initiating portion of the score.

### Rivet

In the end for use in the present invention, as described later, a rivet forming portion is formed by a rivet forming process on a shell formed by press forming of the aluminum alloy sheet, and subsequently a tab is engaged with the rivet forming portion, and then the rivet forming portion is crimped with the top surface of the rivet forming portion pressed, thereby attaching the tab by the rivet. In the end of the present invention, as shown in FIG. 7, it is preferable that a thickness at the center of the rivet forming portion 30 (that is, a thickness t3 at the center of the rivet forming portion after the crimping of the rivet forming portion) is 30% or more of the original thickness t0. This effectively prevents the occurrence of micro-cracking in the organic coating at the center of the top surface of the rivet.

As described above, in the end with the tab attached thereto by crimping the rivet forming portion, as shown in FIG. 8, which is an enlarged cross-sectional photograph of the tab attachment portion, the top surface 31 of the rivet forming portion 30 of the end 1 includes a coined central region (a region indicated by a diameter D1 in FIG. 8) thinner than the periphery thereof. In the present invention, it is preferable that the ratio [(D2/D1) × 100] of a diameter D 1 of the central region to an internal diameter D2 of a side wall portion 32 of the rivet forming portion 30 is in a range from 40% to 95%. This effectively prevents the occurrence of micro-cracking in the organic coating in the rivet forming portion.

When the ratio of the central region D1 is smaller than the aforementioned range, micro-cracking would occur in the organic coating in the central region. On the other hand, when the ratio of the central region D1 is larger than the aforementioned range, micro-cracking would occur in the organic coating in an outer peripheral portion of the central region D1.

### Tab

In the can lid of the present invention, as described above, the tab can be formed from a 5000 series aluminum alloy typically used as a tab or the above-described aluminum alloy.

In the finger hooking portion of the can lid of the present invention, it is preferable that the ratio of the thickness of the finger hooking portion to the original thickness (the thickness of the finger hooking portion/the original thickness) is 2 or more and is not more than the value of the ratio of the thickness of the curled portion of the tab to the original thickness (the thickness of the curled portion/the original thickness).

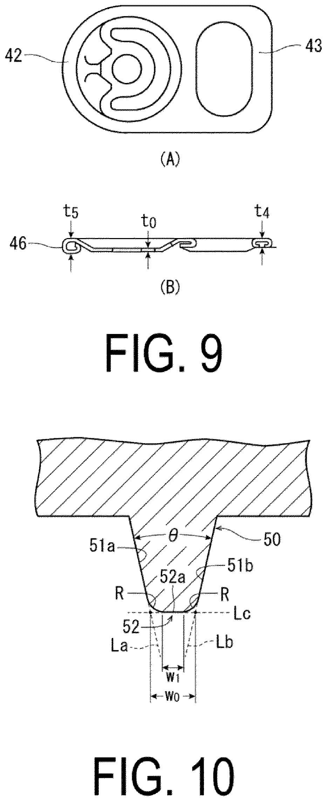

FIGS. 9(A) and 9(B) are views for illustrating one example of the tab applied to the can lid of the present invention, where FIG. 9(A) is a plan view and FIG. 9(B) is a cross-sectional view. As shown in FIG. 9(B), for a thickness t4 of the finger hooking portion (gripping portion) 43 formed by folding process and a thickness t5 of the curled portion 46 of the tab nose portion 42, (the thickness t4 of the finger hooking portion/the original thickness t0) is 2 or more with respect to the original thickness t0 which is the thickness of a tab material used for tab forming, and is not more than the value of the ratio of the thickness of the curled portion of the tab to the original thickness (the thickness t5 of the curled portion/the original thickness t0). When the value of t4/t0 is smaller than 2, cracking would occur on the metal surface during the folding process. On the other hand, when the value of t4/t0 is larger than t5/t0, there is a possibility that the tab is displaced when the rivet forming portion is crimped at the time of attaching the tab, so that the tab cannot be inserted up to the root part of the rivet, resulting in fabrication failure such as scratches of the rivet.

### Method of Producing End

The method of producing an end of the present invention is similar to a known method of producing an end except that a specific score forming blade described later is used. That is, although not limited thereto, a metal sheet such as an aluminum alloy sheet is punched into a circular shape in a press forming step and formed into a shell shape including a seaming panel portion, a chuck wall radius portion, and the like described above, and a compound is applied to a groove of the seaming panel portion in a lining step. Then, a cylindrical projection for a rivet is formed, and a score is scored on an outer surface side of the end in a score forming process. Finally, after the tab is fitted to the projection for a rivet, a head of the projection for a rivet is crimped to attach the tab, thereby producing the end attachable to the can body.

In the present invention, as shown in FIG. 10, it is an important feature that the score forming blade used in the score forming step in the above-described production method includes inclined side surfaces 51a and 51b and a tip portion 52, the inclined side surfaces 51a and 51b facing each other and defining a blade width decreasing toward a tip end in a vertical cross section of the score forming blade 50 in the width direction, and the tip portion 52 being located at lower ends of the inclined side surfaces 51a and 51b, and the score forming blade includes, in at least a part thereof, a portion in which a width w1 of the tip end portion 52 is 65% or less of a width WO of an imaginary tip surface defined by imaginary extension lines La and Lb of the inclined side surfaces 51a and 51b and an imaginary extension line Lc passing through the center of the tip portion 52.

The width of the tip portion is a distance in the middle portion of the tip portion excluding curved surfaces connecting the inclined side surfaces and the tip portion. If the tip portion has a flat portion 52a in the middle portion, the distance is the width of the flat portion, as shown in FIG. 10. However, the width of the flat portion may be as close to 0 as possible, and in such a case, the tip surface has a substantially arc shape continuous with the curved surfaces.

Further, in the preferred embodiment shown in FIG. 10, both sides of the tip portion 52 are continuous with the inclined side surfaces 51a and 51b via the curved surfaces R, but even when both sides of the tip portion are not continuous with the inclined side surfaces via the curved surfaces, an effect similar to that when both sides of the tip portion are continuous with the inclined side surfaces via the curved surfaces can be obtained if the score residual thickness is large, or if the score forming blade is configured with certain angles formed by the inclined side surfaces and the tip portion.

By using the score forming blade having the above-described feature in performing scoring onto the end, a score reflecting the feature of the score forming blade as described above is formed. As a result, it is possible to form a score with improved score strength as described above, and micro-cracking can also be prevented from occurring on the inner surface side of the scoring portion.

The width WO of the imaginary tip surface defined by the imaginary extension lines La and Lb of the inclined side surfaces 51a and 51b of the score forming blade and the imaginary extension line Lc passing through the center of the tip portion 52 of the score forming blade as shown in FIG. 10 is preferably in a range from 15 µm to 40 µm. As a result, micro-cracking does not occur in the organic coating (thermoplastic resin coating or coating film) on the inner surface side of the score portion (back side of the end), metal exposure on the inner surface of the end is effectively prevented, and an end having excellent corrosion resistance can be formed.

When the width WO of the imaginary tip is smaller than the aforementioned range, stress corrosion-caused cracking would occur on the end, depending on the material used. On the other hand, when the width WO of the imaginary tip is larger than the aforementioned range, micro-cracking would more likely occur on the inner surface side of the score portion as compared with the case where the width WO is in the aforementioned range.

Furthermore, the angle Θ of the score forming blade formed by the inclined side surfaces 51a and 51 of the score forming blade shown in FIG. 10 is preferably from 40 degrees to 60 degrees.

When the angle Θ of the score forming blade is within the aforementioned range, micro-cracking does not occur in the organic coating on the inner surface side of the score portion (the back side of the end), metal exposure on the inner surface of the end is effectively prevented, and an end having excellent corrosion resistance can be formed.

When the angle of the score forming blade is larger than the aforementioned range, micro-cracking would occur in the organic coating on the inner surface side of the score portion (the back side of the end). When the angle of the score forming blade is smaller than the aforementioned range, a score forming blade would be damaged due to use for a long time, such as chipping of a cutting edge thereof or chipping or cracking from a root part thereof.

In the rivet forming process, as shown in FIG. 7, after the tab 4 is fitted to the shell 2 having the rivet forming portion 30 formed therein, the tab is attached to the shell with a rivet by the rivet forming process of crimping the rivet forming portion while pressing the top surface of the rivet forming portion 30 from above. In the rivet forming process according to the present invention, the rivet is preferably processed in such a manner that a processing ratio of the rivet central portion to the original thickness is 70% or less, or particularly in a range from 40% to 70%. As shown in FIG. 8, in the coining process of the rivet top surface portion, it is preferable to perform coining such that the ratio [(D2/D1) × 100] of the diameter D1 of the central region of the top surface 31 of the rivet forming portion 30 to the inner diameter D2 of the side wall portion 32 of the rivet forming portion 30 is from 40% to 95%. As a result, it is possible to effectively prevent the occurrence of micro-cracking in the organic coating in the rivet forming portion.

### Examples

### Experimental Example 1

204-diameter shells were prepared using aluminum alloy sheets Nos. 1 to 7, 5182 material which is a general-purpose material for ends and tabs (each of which is an aluminum alloy sheet having a thickness of 0.235 mm and subjected to intermediate annealing during cold rolling), and 3104 material which is a general-purpose material for can bodies (having a thickness of 0.235 mm). These materials have the compositions listed in Table 1. Scoring was performed by using a scoring tool with a score forming blade (with a blade width of 35 µm and an inclined surface angle of 50°, and ends were thus prepared.

Tabs having the shape shown in FIG. 9 were prepared using aluminum alloy sheets Nos. 1 to 7, 5182 material, and 3104 material (each having a thickness of 0.235 mm) also having the compositions listed in Table 1, and attached to the ends to prepare can lids.

The can lids thus prepared were attached to the openings of seamless cans, and the cans were filled with 350 ml of beer cooled to 5°C.

### Evaluations of End and Tab Fabrication

For each end prepared as described above, when a crack was observed by microscopic observation of the surface of the chuck wall radius portion of the end, it was evaluated as "×", and when no crack was observed, it was evaluated as "∘" to evaluate the fabrication failure of the end. The results are listed in Table 1.

The surface of the finger hooking portion of each tab prepared as described above was observed with a microscope, and the tab having cracks was evaluated as "×" and the tab having no cracks was evaluated as "∘" to evaluate the fabrication failure of the tab. The results are listed in Table 1.

### Pressure Resisting Strength Measurement

A hole was formed in the can body of the beer-filled can prepared as described above, a tube was connected thereto, the can was pressurized with air at a pressure increasing rate of about 0.33 kgf/cm² per second, and a peak value when the lid was inverted was observed. If the peak value was 5.5 kgf/cm² or more, it was indicated by "∘", and if not, it was indicated by "×" to evaluate the pressure resisting strength. The results are listed in Table 1.

**Table 1**

| Alloy Species | Chemical Component Value (mass%) | | | | | End Fabrication Failure | Pressure resisting strength ≥ 5.5 kgf/cm2 | Tab Fabrication Failure |
|---|---|---|---|---|---|---|---|---|
| | Si | Fe | Cu | Mn | Mg | | | |
| No.1 | 0.3 | 0.5 | 0.2 | 0.9 | 3.0 | ○ | ○ | ○ |
| No.2 | 0.3 | 0.5 | 0.2 | 0.9 | 2.3 | ○ | ○ | ○ |
| No.3 | 0.3 | 0.5 | 0.2 | 0.9 | 2.0 | ○ | ○ | ○ |
| No.4 | 0.3 | 0.5 | 0.2 | 0.9 | 1.7 | ○ | × | ○ |
| No. 5 | 0.2 | 0.4 | 0.1 | 0.5 | 3.3 | ○ | ○ | ○ |
| No.6 | 0.2 | 0.4 | 0.1 | 0.5 | 4.5 | ○ | ○ | ○ |
| No.7 | 0.2 | 0.4 | 0.1 | 0.5 | 4.7 | × | ○ | × |
| 5182 Material (general-purpose material for can end and can tab) | 0.1 | 0.2 | 0.1 | 0.3 | 4.5 | ○ | ○ | ○ |
| 3104 Material (general-purpose material for can body) | 0.3 | 0.5 | 0.2 | 1.0 | 1.2 | ○ | × | ○ |

### Experimental Example 2

A 204-diameter shell was prepared using an aluminum alloy sheet S having a thickness of 0.235 mm (Mn: 0.9 mass%, Mg: 2.3 mass%, Si :0.3 mass%, Fe: 0.5 mass%, Cu: 0.2 mass%, Cr: 0.01 mass%, Zn: 0.14 mass%, Ti: 0.01 mass%). A score was formed on the shell thus prepared, according to a common method, and a tab was attached thereto to prepare a can lid.

The can lid prepared above was attached to the opening of a seamless can, and the can was filled with 350 ml of beer cooled to 5°C.

### Vibration test

For the beer-filled can having the score residual rate of the opening initiating portion listed in Table 2, the test was carried out under the following conditions by using a vibration tester (electrodynamic vibration tester available from Shinken Co., Ltd.).

Vibration direction: can axial direction, Number of Vibrations: 10 Hz, Vibration Time: 60 minutes, Amplitude: 5 mm, Number of stacks: 24 cans in 3c/s, Can temperature: 30°C, Internal pressure: about 300 kPa

A case where leakage from the score portion did not occur was evaluated as "∘", and a case where leakage occurred was evaluated as "×".

### Drop Test in Inverted State

A beer-filled can having the score residual rate of the thinnest portion as listed in Table 3 was dropped from a height of 150 cm under conditions of a can temperature of 30°C and an internal pressure of about 300 kPa with the end side facing downward, and leakage of beer from the score portion was observed. A case where leakage did not occur was evaluated as "∘", and a case where leakage occurred was evaluated as "×".

### Opening Test

The beer-filled cans listed in Tables 2 and 3 were subjected to opening formation, and the case where they were normally opened was evaluated as "∘", and the case where they were not normally opened (opening initiating impossible, beyond the score, or opened only halfway) was evaluated as "×".

**Table 2**

| Ratio [%] of Flat Portion to Cutting Edge Bottom Surface (Blade Width); | Score Residual Rate [%] of Opening Initiating Portion | Leakage from Score in Vibration Test | Poor Opening |
|---|---|---|---|
| 95 | 43 | × | ○ |
| | 47 | × | ○ |
| | 51 | × | ○ |
| | 55 | ○ | ○ |
| 90 | 43 | × | ○ |
| | 47 | × | ○ |
| | 51 | × | ○ |
| | 55 | ○ | ○ |
| 80 | 43 | × | ○ |
| | 47 | × | ○ |
| | 51 | ○ | ○ |
| 65 | 43 | ○ | ○ |
| | 47 | ○ | ○ |
| | 51 | ○ | ○ |
| 45 | 43 | ○ | ○ |
| | 47 | ○ | ○ |
| | 51 | ○ | ○ |
| 25 | 43 | ○ | ○ |
| | 47 | ○ | ○ |
| | 51 | ○ | ○ |
| 10 | 43 | ○ | ○ |
| | 47 | ○ | ○ |
| | 51 | ○ | ○ |
| 0 | 43 | ○ | ○ |
| | 47 | ○ | ○ |
| | 51 | ○ | ○ |

**Table 3**

| Ratio [%] of Flat Portion to Cutting Edge Bottom Surface (Blade Width); | Score Residual Rate [%] of Thinnest Portion | Leakage from Score When Dropping in Inverted State | Poor Opening |
|---|---|---|---|
| 95 | 34 | × | ○ |
| | 37 | × | ○ |
| | 39 | × | ○ |
| | 41 | ○ | ○ |
| 90 | 34 | × | ○ |
| | 37 | × | ○ |
| | 39 | × | ○ |
| | 41 | ○ | ○ |
| 80 | 34 | × | ○ |
| | 37 | × | ○ |
| | 39 | ○ | ○ |
| 65 | 34 | ○ | ○ |
| | 37 | ○ | ○ |
| | 39 | ○ | ○ |
| 45 | 34 | ○ | ○ |
| | 37 | ○ | ○ |
| | 39 | ○ | ○ |
| 25 | 34 | ○ | ○ |
| | 37 | ○ | ○ |
| | 39 | ○ | ○ |
| 10 | 34 | ○ | ○ |
| | 37 | ○ | ○ |
| | 39 | ○ | ○ |
| 0 | 34 | ○ | ○ |
| | 37 | ○ | ○ |
| | 39 | ○ | ○ |

### Experimental Example 3

Main scores were formed on the 204-diameter shell (aluminum alloy sheet S) prepared in Experimental Example 2 and a 204-diameter shell made of 5182 material having a thickness of 0.235 mm by using a scoring tool having a WO value shown in FIG. 3 as listed in Table 4. The ratio of the flat portion to the cutting edge bottom surface (blade width) was 65%.

The surface on the back side of the main score portion of the end was observed, and the presence or absence of micro-cracking in the organic coating was observed by microscopic observation. Those without micro-cracking are indicated by "∘" and those with micro-cracking occurred are indicated by "×" in Table 4.

In addition, a can lid having a tab attached to the end after forming the score was attached to the opening of a seamless can, and the can was filled with 350 ml of beer cooled to 5°C. Thereafter, the can was stored in an environment of 37°C and 80% RH for 2 weeks. The results are listed in Table 4 with "∘" indicating that no leakage occurred and the end had stress corrosion-caused cracking resistance and "×" indicating that leakage occurred and the end did not have stress corrosion resistance.

**[Table 4]**

| Materials | Width of Intersection A-A' (µm) | Micro-Cracking in Organic Coating on Inner Surface Side of Score Portion | Leakage Due to Stress Corrosion-Caused Cracking |
|---|---|---|---|
| Aluminum Alloy Sheet S | 50 | × | ○ |
| | 45 | × | ○ |
| | 40 | ○ | ○ |
| | 35 | ○ | ○ |
| | 30 | ○ | ○ |
| | 25 | ○ | ○ |
| | 20 | ○ | ○ |
| | 15 | ○ | ○ |
| 5182 Material | 45 | ○ | ○ |
| | 40 | ○ | ○ |
| | 20 | ○ | × |

### Experimental Example 4

A main score was formed on the 204-diameter shell prepared in Experimental Example 2 using a scoring tool having a score angle Θ shown in FIG. 3 as listed in Table 5. The ratio of the flat portion to the cutting edge bottom surface (blade width) was 65%.

The surface on the back side of the main score portion of the end was observed, and the presence or absence of micro-cracking in the organic coating was observed by microscopic observation. Those without micro-cracking are indicated by "∘" and those with micro-cracking occurred are indicated by "×" as listed in Table 5.

**Table 5**

| Angles (θ) ° of Score Blade Taper Portion | Micro-cracking in Coating Film on the Inner Surface Side of Score |
|---|---|
| 40 | ○ |
| 45 | ○ |
| 50 | ○ |
| 55 | ○ |
| 60 | ○ |
| 65 | × |

### Experimental Example 5

On the 204-diameter shell (aluminum alloy sheet S) prepared in Experimental Example 2, a main score and an auxiliary score having the respective exclusion amounts listed in Table 6 were formed using a scoring tool. Further, a tab made of a 5000 series aluminum alloy sheet (5182 material) was attached thereto to prepare a can lid.

The surface on the back side of the main score portion of the end was observed, and the presence or absence of micro-cracking in the organic coating was observed by microscopic observation. Those without micro-cracking are indicated by "∘", and those with micro-cracking occurred are indicated by "×" as listed in Table 6.

**[Table 6]**

| | | | | | | | | | |
|---|---|---|---|---|---|---|---|---|---|
| Metal Exclusion Amount [mm2] by Main Score | 0.0135 | 0.0135 | 0.0135 | 0.0135 | 0.0135 | 0.0143 | 0.015 | 0.0166 | 0.0166 |
| Metal Exclusion Amount [mm2] by Auxiliary Score | 0.0273 | 0.026 | 0.0247 | 0.0234 | 0.0221 | 0.0221 | 0.0221 | 0.0221 | 0.0208 |
| **Ratio of Auxiliary Score Exclusion Amount to Main Score Exclusion Amount** | **202%** | **193%** | **183%** | **173%** | **164%** | **155%** | **147%** | **133%** | **125%** |
| Presence or Absence of Micro-cracking in Organic Coating | ○ | ○ | ○ | ○ | ○ | ○ | ○ | ○ | ○ |
| Metal Exclusion Amount [mm2] by Main Score | 0.0166 | 0.0166 | 0.0166 | 0.0166 | 0.0166 | 0.0166 | 0.0166 | 0.0166 | 0.0166 |
| Metal Exclusion Amount [mm2] by Auxiliary Score | 0.0182 | 0.0135 | 0.0103 | 0.0089 | 0.0076 | 0.0063 | 0.0052 | 0.0041 | 0.0031 |
| **Ratio of Auxiliary Score Exclusion Amount to Main Score Exclusion Amount** | **110%** | **81%** | **62%** | **54%** | **46%** | **38%** | **31%** | **25%** | **19%** |
| Presence or Absence of Micro-cracking in Organic Coating | ○ | ○ | ○ | ○ | ○ | ○ | ○ | ○ | × |

### Experimental Example 6

On the 204-diameter shell (aluminum alloy sheet S) prepared in Experimental Example 2, a spout prevention score with a score residual rate as listed in Table 7 was formed together with an auxiliary score and a main score (score residual rate: 50%). Further, a tab made of a 5000 series aluminum alloy sheet (5182 material) was attached thereto to prepare a can lid.

In order to evaluate the pop missile resistance of the resulting can lid, the can lid was attached to a seamless can, a hole was formed in the can body, and a tube was connected thereto. The can body was pressurized with air at a pressure increasing rate of about 0.33 kgf/cm² per second, and the internal pressure was applied up to 5.5 kgf/cm² while monitoring the value of a manometer. Opening was performed in this state, and whether or not opening was performed normally was observed. The case where no pop missile occurred is indicated by "∘" and the case where pop missile occurred is indicated by "×" as listed in Table 7.

**[Table 7]**

| Spout Prevention Score Residual Rate (%) | Presence or Absence of Micro-cracking in Coating Film on Inner Surface Side of Spout Prevention Score | Pop Missile Resistant Effect |
|---|---|---|
| 65 | × | ○ |
| 70 | ○ | ○ |
| 75 | ○ | ○ |
| 80 | ○ | ○ |
| 85 | ○ | ○ |
| 90 | ○ | ○ |
| 95 | ○ | × |

### Experimental Example 7

The 204-diameter shell (aluminum alloy sheet S) prepared in Experimental Example 2 was subjected to rivet forming with a press forming machine so that the processing ratio of the rivet top surface was the value listed in Table 8. The presence or absence of micro-cracking in the organic coating at the center of the rivet top surface was observed by microscopic observation. Those without micro-cracking are indicated by "∘", and those with micro-cracking occured are indicated by "×" as listed in Table 8.

**[Table 8]**

| Processing Rate % of Central Portion of Top Surface | Micro-cracking in Organic Coating at Center of Top Surface of Rivet |
|---|---|
| 40 | ○ |
| 50 | ○ |
| 60 | ○ |
| 70 | ○ |
| 80 | × |

### Experimental Example 8

For the 204-diameter shell (aluminum alloy sheet S) prepared in Experimental Example 2, can lids were formed using tools designed so that the values of D2/D1 shown in FIG. 8 were the ratios listed in Table 9. The organic coating on the central portion of the D1 region and on the outer peripheral portion of the D1 region in FIG. 8 was observed by microscopic observation. Those without micro-cracking are indicated by "∘", and those with micro-cracking occurred are indicated by "×" as listed in Table 9.

**[Table 9]**

| Coining Portion Ratio | Coating Film Surface Micro-cracking in Central Portion of D1 Region | Coating Film Surface Micro-cracking in Outer Peripheral Portion of D1 Region |
|---|---|---|
| 97% | × | ○ |
| 95% | ○ | ○ |
| 90% | ○ | ○ |
| 80% | ○ | ○ |
| 70% | ○ | ○ |
| 60% | ○ | ○ |
| 50% | ○ | ○ |
| 40% | ○ | ○ |
| 35% | ○ | × |

### Experimental Example 9

Tabs having the shape shown in FIG. 9 were formed by using aluminum alloy sheets S having thicknesses of 0.330 mm and 0.279 mm while keeping the thicknesses of the tab nose portions constant and changing the thicknesses of the finger hooking portions (gripping portions) as listed in Tables 10 and 11. These tabs were attached to the 204-diameter shells (aluminum alloy sheet S) prepared in Experimental Example 1 to prepare can lids. The presence or absence of micro-cracking in the organic coating of the finger hooking portion of the tab was observed by microscopic observation. Those without micro-cracking are indicated by "∘", and those with micro-cracking occurred are indicated by "×" as listed in Tables 10 and 11.

In addition, the presence or absence of a scratch in the rivet was observed, and the presence or absence of fabrication failure was observed. In Tables 10 and 11, "∘" indicates that there is no fabrication failure, and "×" indicates that there is a scratch or the like.

**[Table 10]**

| Original Thickness | 0.33 | Thickness | Thickness ratio | Cracking | Rivet Fabrication Failure |
|---|---|---|---|---|---|
| Thickness of Curled Portion 46: t5 | | 1.6 | 485% | - | - |
| Thickness of Gripping portion 43: t4 | | 1.8 | 545% | ○ | × |
| | | 1.7 | 515% | ○ | × |
| | | 1.6 | 485% | ○ | ○ |
| | | 1.5 | 455% | ○ | ○ |
| | | 1.2 | 364% | ○ | ○ |
| | | 1 | 303% | ○ | ○ |
| | | 0.8 | 242% | ○ | ○ |
| | | 0.75 | 227% | ○ | ○ |
| | | 0.66 | 200% | ○ | ○ |
| | | 0.6 | 182% | × | ○ |
| | | 0.4 | 121% | × | ○ |

**Table 11]**

| Original Thickness | 0.279 | Thickness | Thickness ratio | Cracking | Rivet Fabrication Failure |
|---|---|---|---|---|---|
| Thickness of Curled Portion 46: t5 | | 1.6 | 573% | - | - |
| Thickness of Gripping portion 43: t4 | 1.8 | 645% | ○ | × | |
| | 1.7 | 609% | ○ | × | |
| | 1.6 | 573% | ○ | ○ | |
| | 1.5 | 538% | ○ | ○ | |
| | 1.2 | 430% | ○ | ○ | |
| | 1 | 358% | ○ | ○ | |
| | 0.8 | 287% | ○ | ○ | |
| | 0.7 | 251% | ○ | ○ | |
| | 0.6 | 215% | ○ | ○ | |
| | 0.5 | 179% | × | ○ | |
| | 0.4 | 143% | × | ○ | |

According to the disclosure above, advantages according to some of features selected and used by a person in touch with the present disclosure as appropriate can be achieved, and synergistic advantages can be achieved by using a plurality of the features in combination.

### Industrial Applicability

In the can lid according to the present invention, even when a recycled material made up of aluminum UBCs is used, since the amounts of alloy elements are adjusted, an end having an excellent pressure resisting strength and a tab having excellent bending resistance and tearing resistance can be obtained, and thus the can lid can be used in positive pressure cans. In addition, since a can lid for food or drink similar to can lids made from new aluminum can be obtained, it can be suitably used to applications requiring reduction of carbon dioxide emission.

In addition, since the form (such as shape and dimension) of the tearable score (main score) formed on the end is improved, even if the end is made of a recycled aluminum alloy made up of aluminum UBCs as a raw material, in which the amount of Al-Fe-Mn-Si-based crystals increases, an end can be provided which has a high score strength and in which the occurrence of micro-cracking in the organic coating is effectively prevented, allowing the end to have an excellent corrosion resistance and the like.

### Reference Signs List

1: Can Lid, 2: End, 3: Rivet, 4: Tab, 21: Center Panel, 22: Chuck Wall Radius, 23: Chuck Wall, 24: Seaming Panel, 25: Score, 26: Inclined Surface of Score, 27: Bottom Surface of Score, 41: Tab Body, 42: Tab Nose Portion, 43: Gripping Portion, 44: Fixing Portion, 46: Curled Portion

## Claims

1. A can lid for food or drink, comprising an end and a tab, the end including a score defining a portion to be opened and being tearable, and the tab being attached by a rivet,
the end and/or the tab including an aluminum alloy containing: Mn: 0.5 mass% to 1.4 mass%, Mg: 2.0 mass% to 4.5 mass%, Si: 0.6 mass% or less, Fe: 0.8 mass% or less, Cu: 0.25 mass% or less, Cr: 0.10 mass% or less, Zn: 0.25 mass% or less, and Ti: 0.10 mass% or less.

2. The can lid for food or drink according to claim 1, wherein the aluminum alloy contains: Mn: 0.5 mass% to 1.0 mass%, Mg: 3.0 mass% to 4.5 mass%, Si: 0.60 mass% or less, Fe: 0.8 mass% or less, Cu: 0.25 mass% or less, Cr: 0.10 mass% or less, Zn: 0.25 mass% or less, and Ti: 0.10 mass% or less.

3. The can lid for food or drink according to claim 1, wherein the aluminum alloy contains: Mn: 0.5 mass% to 1.0 mass%, Mg: 3.0 mass% to 4.5 mass%, Si: 0.35 mass% or less, Fe: 0.6 mass% or less, Cu: 0.25 mass% or less, Cr: 0.10 mass% or less, Zn: 0.25 mass% or less, and Ti: 0.10 mass% or less.

4. The can lid for food or drink according to claim 1, wherein the aluminum alloy contains: Mn: 0.5 mass% to 1.0 mass%, Mg: 2.0 mass% to 3.0 mass%, Si: 0.60 mass% or less, Fe: 0.8 mass% or less, Cu: 0.25 mass% or less, Cr: 0.10 mass% or less, Zn: 0.25 mass% or less, and Ti: 0.10 mass% or less.

5. The can lid for food or drink according to claim 1, wherein the aluminum alloy contains: Mn: 0.5 mass% to 1.0 mass%, Mg: 2.0 mass% to 3.0 mass%, Si: 0.35 mass% or less, Fe: 0.6 mass% or less, Cu: 0.25 mass% or less, Cr: 0.10 mass% or less, Zn: 0.25 mass% or less, and Ti: 0.10 mass% or less.

6. The can lid for food or drink according to any one of claims 1, 4, and 5, wherein the Mg content in the aluminum alloy is from 2.0 mass% to 3.0 mass%, and a score residual thickness in an opening initiating portion of the score is 71% or less of an original thickness.

7. The can lid for food or drink according to any one of claims 1 to 6, wherein the aluminum alloy sheet after coating and baking has a tensile strength ranging from 350 MPa to 410 MPa in a 0° direction with respect to a rolling direction.

8. The can lid for food or drink according to any one of claims 1 to 7, wherein a non-processed portion of the end has a thickness of 0.19 mm to 0.30 mm, and a non-processed portion of the tab has a thickness of 0.24 mm to 0.35 mm.

9. The can lid for food or drink according to any one of claims 1 to 8, wherein the end and the tab are made of the same aluminum alloy.

10. The can lid for food or drink according to any one of claims 1 to 9, wherein the aluminum alloy includes a recycled material recycled from used aluminum beverage cans.

11. The can lid for food or drink according to claim 10, wherein the Mn content of the aluminum alloy is from 0.8 mass% to 1.4 mass%.

12. The can lid for food or drink according to any one of claims 1 to 11, wherein the tearable score includes inclined surfaces and a bottom surface in a vertical cross section of the score in a width direction of the score, the inclined surfaces facing each other and defining a score width decreasing downward, and the can lid includes, in at least a part thereof, a portion in which a width of the bottom surface is 65% or less of a width of an imaginary bottom surface defined by imaginary extension lines of the inclined surfaces and an imaginary extension line passing through a center of the bottom surface.

13. The can lid for food or drink according to claim 12, wherein the inclined surfaces and the bottom surface are continuous via curved surfaces.

14. The can lid for food or drink according to claim 12 or 13, wherein the bottom surface includes a flat portion in a middle portion thereof, and a width of the flat portion is 65% or less of the width of the imaginary bottom surface.

15. The can lid for food or drink according to any one of claims 12 to 14, wherein the width defined by the imaginary extension lines of the inclined surfaces and the imaginary extension line passing through the center of the bottom surface is from 15 µm to 40 µm.

16. The can lid for food or drink according to any one of claims 12 to 15, wherein a score angle formed by the inclined surfaces is from 40 degrees to 60 degrees.

17. The can lid for food or drink according to any one of claims 1 to 16, wherein the tearable score is a main score, the can lid includes an auxiliary score adjacent to the main score and located at an inner side of the main score, and in a vertical cross section of the score in the width direction of the score, a metal exclusion amount S0 by fabrication of the auxiliary score is 25% or more of a metal exclusion amount S 1 by fabrication of the main score.

18. The can lid for food or drink according to any one of claims 1 to 17, wherein the main score includes a great score residual thickness portion in which a score residual thickness with respect to an imaginary thickness when no score is formed in a scoring portion is larger than a main score residual thickness rate and is 85% or less.

19. The can lid for food or drink according to any one of claims 1 to 18, wherein the tearable score is a main score, the can lid includes an auxiliary score adjacent to the main score and located at an inner side of the main score, a spout prevention score in the vicinity of the main score is formed in the vicinity of an opening initiating portion of the main score, and a score residual thickness of the spout prevention score is from 70% to 90% of an original thickness.

20. The can lid for food or drink according to any one of claims 1 to 19, wherein the end includes a rivet forming portion for tab attachment, and a processing rate of a central portion of the rivet forming portion to an original thickness is 70% or less of the original thickness.

21. The can lid for food or drink according to any one of claims 1 to 20, wherein a ratio of a diameter of a coining region of a top surface of the rivet forming portion of the end to an inner diameter of a side wall portion of the rivet forming portion is from 40% to 95%.

22. The can lid for food or drink according to any one of claims 1 to 21, wherein the tab includes a finger hooking portion in which a ratio of a thickness of the finger hooking portion to an original thickness (the thickness of the finger hooking portion/the original thickness) is 2 or more and equal to or less than a value of a ratio of a thickness of a curled portion of the tab to the original thickness (the thickness of the curled portion/the original thickness).

23. A method of producing an end, the method being a method of producing the can lid for food or drink according to any one of claims 1 to 22, wherein a score forming blade for use in forming the tearable score includes inclined side surfaces and a tip portion, the inclined side surfaces facing each other and defining a blade width decreasing toward the tip portion in a vertical cross section in the width direction of the score forming blade, and the tip portion being located at lower ends of the inclined side surfaces, and the score forming blade includes, in at least a part thereof, a portion in which a width of the tip portion is 65% or less of a width of an imaginary tip surface defined by imaginary extension lines of the inclined side surfaces and an imaginary extension line passing through a center of the tip portion.

24. The method of producing an end according to claim 23, wherein both sides of the tip portion are continuous with the inclined side surfaces via curved surfaces.

25. The method of producing an end according to claim 23 or 24, wherein the tip portion includes a flat portion in a middle portion thereof, and a width of the flat portion is 65% or less of a width of the imaginary tip surface.

26. A can for containing food or drink, wherein the can lid for food or drink according to any one of claims 1 to 22 is applied to a can containing food or drink.
